(19) Europäisches Patentamt
European Patent Office
Office européen des brevets

(11) **EP 4 614 398 A1**

(12) **EUROPEAN PATENT APPLICATION**

(43) Date of publication:
**10.09.2025  Bulletin 2025/37**

(21) Application number: **24305336.0**

(22) Date of filing: **05.03.2024**

(51) International Patent Classification (IPC):
**G06N 10/20** (2022.01)    **G06N 10/40** (2022.01)
**G06N 10/70** (2022.01)

(52) Cooperative Patent Classification (CPC):
**G06N 10/20; G06N 10/40; G06N 10/70**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Alice & Bob**
**75015 Paris (FR)**

(72) Inventors:
• **COTTET, Nathanaël**
**75015 Paris (FR)**
• **DEVULDER, Adam**
**75015 Paris (FR)**
• **GÜMÜS, Efe**
**75015 Paris (FR)**

(74) Representative: **Atout PI Laplace**
**Immeuble Up On**
**25 Boulevard Romain Rolland**
**CS 40072**
**75685 Paris Cedex 14 (FR)**

(54) **A METHOD OF CALIBRATION OF A PARAMETER OF A SEQUENCE FOR PERFORMING A QUANTUM OPERATION**

(57)    A method of calibration of at least one parameter of an interaction sequence for performing a physical quantum operation defined on a single or multi-qubit system in a superconducting circuit based on cat qubits having a reduced bit-flip error rate as a noise-bias, the method comprising, for a qubit of the system affected by variations of the at least one parameter and with a list of at least one state of said qubit system, steps of, for a value of the at least one parameter and for each state of the list,
- preparing (S20) the state,
- applying (S30) the interaction sequence on the prepared state and with the parameter value,
- measuring (S40) bit-flipped and bit-unflipped populations of the affected qubit at an end of said applying,
iterating (S50, S60, S10, S20) the said preparing, applying and measuring steps with varied values of the at least one parameter, sweeping a range of candidate values of the at least one parameter, and then identifying (S70), from populations measured during the iterating steps, an optimum of preservation of said noise-bias by the operation, and implementing (S80) as a calibrated value of the at least one parameter an inferred parameter value associated with the said identified optimum.

Fig. 9

Choose a value of the parameter — S10

Prepare a state of the system (from the list) — S20

Apply the interaction sequence with the value of the parameter — S30

Measure unmodified and flipped populations on the scrutinized qubit — S40

Iterate, changing state, if any state remaining in the list — S50

Iterate, sweeping a range of candidate values of the parameter — S60

Identify an optimum from the measured populations — S70

implement as a calibrated parameter value an inferred parameter value associated with the optimum — S80

**Description**

Background

The present disclosure relates to the field of quantum technologies, and more specifically to the calibration of quantum circuits involved in quantum information processing and quantum computing.

Quantum information processing, that enables quantum computing, consists of encoding and manipulating quantum information, typically in two-level quantum systems - named qubits. Qubits states are represented on a sphere called the Bloch sphere, with the north and south poles of the Bloch sphere corresponding to standard basis vectors $|0>$ and $|1>$. Any pure state of a two-level quantum system can be written as a superposition of the basis vectors $|0>$ and $|1>$, where the contribution from each of the two basis vectors is a complex number.

In this context, the operations, among which logic gates, involved are implemented with sequences of interaction including wave pulses, in particular microwave pulses. Some of these operations and gates act on a single qubit and some others act on multi-qubit systems. Each operation or gate has a name and possibly one or few parameters, in particular numerical parameters.

Typical examples of single-qubit gates are the $X(\theta)$ and $Z(\theta)$ gates, which are rotations by an angle $\theta$ around respectively the X- and Z- axis of the Bloch sphere.

An example of a multi-qubit gate is the two-qubit gate controlled-NOT (abbreviated CNOT or CX). The action of a CNOT gate on the input is to apply a NOT operation on one of the qubits - designated as the target qubit - or to leave it unchanged, conditional to the state of the other qubit - designated as control. The control qubit is left unchanged in all operations of the CNOT gate.

The different parameters of the physical realization of the operations and gates need to be calibrated to implement the operations on quantum hardware. The calibration can be possibly performed once and for all, or most likely, be performed and adjusted from time to time or at important moment of the use of the hardware.

As for hardware building, encoding quantum information in states of harmonic oscillators, that are bosonic modes (most well-known bosons being the photons) is a solution adopted by several actors in the field. Superconducting microwave circuits in cryostat including LC resonators and Josephson junctions are used for implementing the qubits and the gates. And specifically, in such superconducting circuits gates can be implemented with microwave individual pulses or pulses combinations, and the parameters to optimize are thus the pulses amplitudes, phases and durations, among others.

But when considering operations and gates, the issue of the quantum noise has to be considered, since isolated qubits experience two fundamental errors, i.e. bit flips and phase flips, the rates of errors growing with the size of the qubit. Noise is generally speaking a major subject in quantum circuits, and strategies are devised to master its effects with hopefully limited resources.

One of these strategies is the design of noise-bias qubits, and in particular so called cat qubits are noise-bias qubits. In these qubits one of the two types of errors is exponentially suppressed in the cat-qubit size - the size of the cat-qubit being the average number of photons in the oscillator - while the other type of errors increases only linearly with the size. The protection or stabilization of the qubits is obtained through two-photon driven dissipation or through a Kerr-type Hamiltonian and two photon drives.

According to current knowledge, the suppression applies to physical noise processes such as photon loss, thermal excitations, photon phase shift, and various nonlinearities induced by coupling to a Josephson junction.

And due to this noise structure, in order to realize logical qubits, error correction becomes easier.

Autoparametric resonance extending the bit-flip time of a cat qubit up to 0.3 s has been shown by Marquet et al. arXiv:2307.06761 2023. Control of a cat qubit with bit flip times exceeding ten seconds has been shown in Reglade et al., arXiv:2307.06617 2023.

Quantum gates and operations operating on noise-bias qubits need to be noise-preserving in order to enable a coherent implementation of the quantum circuits. Guillaud and Mirrahimi Phys. Rev. X 9, 041053 2019 listed the following fundamental operations at the cat-qubit level as bias-preserving: preparation of the $|+>$ cat state or of the $|->$ cat state, measurement of X, X gate, CNOT gate, Toffoli gate, rotation around Z of a given angle and a two qubit entangling gate.

Marquet et al. contemplates calibration of a drive phase of a Z gate, by looking at how fast the Wigner function fringes shift over time and extracting an oscillation rate. Reglade et al., arXiv:2307.06617 2023. disclosed essentially the same principles on this topic. While this was an achievement at the time, the applicant realized that further research was needed to improve the precision, accuracy and reliability of gate and operation calibration methods.

Summary of the invention

In this context, there is provided a method of calibration of at least one parameter of an interaction sequence for performing a quantum operation, and in particular, when the operation is a gate, a method of calibration of a parameter of a physical quantum gate. The interaction sequence is generally composed of a pulse sequence, but is not limited to a pulse sequence.

In all generality, the operation is defined on a single or multi-qubit system in a superconducting circuit based on cat qubits having a reduced bit-flip error rate as a noise-bias, the method comprising, for a qubit of the system affected by variations of the at least one parameter and with a list of at least one state of said qubit system, steps of, for a value of the at least one parameter and for each state of the list,

- preparing the state,
- applying the interaction sequence on the prepared state and with the parameter value,
- measuring bit-flipped or bit-unflipped populations, or both, of the affected qubit at an end of said applying,

iterating the said preparing, applying and measuring steps with varied values of the at least one parameter, in order to sweep a range of candidate values of the at least one parameter, and then identifying, from populations measured during the iterating steps, an optimum of preservation of said noise-bias by the operation, and implementing as a calibrated value of the at least one parameter an inferred parameter value associated with the said identified optimum.

The features of the invention allow a highly accurate calibration of the examined parameters, through the use of the measuring of bit-flipped and/or bit-unflipped populations. Indeed the dependency of the bit-flip rates depending on the gate parameters is very high, and the results are very accurate, with lower uncertainty intervals and better final results. The robustness is ensured by the noise bias - bit flip rates can indeed be arbitrarily small.

In various and non-limiting embodiments, the following features are advantageous:

The at least one parameter may comprise a phase angle of a microwave pulse sent to a nonlinear coupling element coupling a memory of a qubit of the system to a buffer of said qubit (pumping the nonlinear coupling element, possibly an ATS or asymmetrically threaded SQUID, at the frequency $f_p = |2f_a - f_b|$) $f_a$ and $f_b$ being the frequency of the memory and of the buffer. In that case, the following features may be used: the system has two qubits, including a control cat qubit and a target cat qubit; the gate might be a CNOT gate; the phase angle of the microwave pulse is the phase of the pulse relative to the stabilization angle of the control cat qubit; The microwave pulse is sent at the frequency $f_p = |2f_a - f_b|$) to the nonlinear coupling element coupling the memory of the target cat qubit to the buffer of the target cat qubit. The interaction sequence may include - preparing a first state from the list, wherein the list includes: (i) +alpha_C + alpha_T and -alpha_C + alpha_T; or (ii) +alpha_C - alpha_T and -alpha_C - alpha_T (that is, the alpha_T's of the list remain consistent). Applying the interaction sequence may comprise sending the microwave pulse, wherein the parameter value is the phase angle. Measuring comprises measuring the number of bit flips of the initially prepared state of the control cat qubit (so if chose +alpha_C + alpha_T intially, then measuring bit-flips from +alpha_C), and eventually, the sequence is repeated for other states in the list. Optimum of preservation of said noise-bias by the gate is identified when number of bit flips from the control in the first state of the list is equal to the number of bit flips from the control in the other state of the list

The at least one parameter may comprise a phase angle of a microwave pulse sent at the frequency of a memory of a qubit of the system. In that case, the following features may be used:

- the microwave pulse can be sent anywhere on the circuit, not necessary on the memory per se (although its effects do reach the memory). A pulse can be sent through a transmission line directly coupled to the memory but this is optional.
- the system might be a single cat qubit system, the gate might be a $Z(\theta)$ gate, the phase angle of microwave pulse is the phase of the pulse relative to the stabilization angle of the cat qubit; The interaction sequence could be - prepare a first state from the list, wherein the list includes +alpha and -alpha. Applying the interaction sequence comprises sending the microwave pulse, and wherein the parameter value is the phase angle. Measuring comprises measuring the number of bit flips from the prepared state. This is repeated for the other states from the list. Optimum of preservation of said noise-bias by the gate is identified when number of bit flips from the first state of the list is equal to the number of bit flips from the other state of the list.

But also the system might be a multi cat qubit system (with possibly two qubits, including a control cat qubit and target cat qubit), the gate might be a CNOT gate, the phase angle of microwave pulse is the phase of a pulse sent at the frequency of the memory of the control as a spurious effect cancellation pump; The phase angle of this cancelation microwave pulse might be explicitly the phase of the pulse relative to the stabilization angle of the control cat. The interaction sequence could be - prepare a first state from the list, wherein the list includes nothing in the target and in the control: +alpha, i alpha, -alpha and -i alpha. Applying the interaction sequence comprises sending the microwave pulse, and wherein the parameter value is the phase angle. Measuring comprises measuring the number of bit flips from the prepared state in the control cat qubit. This is repeated for the other states from the list. Optimum of preservation of said noise-bias by the gate is identified when numbers of bit flips from the states of the list equalize to each other.

The at least one parameter may comprise the duration of a release of a driven stabilization of a qubit of the system. The system may be a single cat qubit, and the gate might be an X gate. The interaction sequence may start with prepare +alpha or -alpha. Applying the interaction sequence may comprise duration of release of stabilization of the single cat qubit. Measuring may comprise measuring the number of bit flips from the prepared state (or equivalently measuring the number of bit flips from the other state). There is no need necessarily to repeat for the other states from the list. The list may include only one state. Optimum of preservation of said noise-bias by the gate is identified when: If prepared +alpha, then when the number of bit flips from -alpha is at minimum ( i.e. minimum population in +alpha); or If prepared -alpha, then when the number of bit flips from +alpha is at minimum ( i.e. minimum population in -alpha).

The at least one parameter may comprise an integration over time of an amplitude of a microwave pulse sent, during the implementation of the operation, to a nonlinear coupling element coupling a memory of a qubit of the system to a buffer of said qubit. In that case the following features may be used : the system has two qubits, including a control cat qubit and target cat qubit. A CNOT microwave pulse is sent to the nonlinear coupling element coupling the memory of the target cat qubit to the buffer of the target cat qubit at the frequency $f_p = |2f_a - f_b|$). The sequence includes prepare a first state from the list, wherein the list includes: (i) +alpha_C + alpha_T and -alpha_C + alpha_T; or (ii) +alpha_C - alpha_T and -alpha_C - alpha_T (that is, the alpha_T's of the list remain consistent). Applying the interaction sequence comprises sending the CNOT microwave pulse, and wherein the parameter value is the time integral of amplitude. Measuring comprises measuring the number of bit flips of the target cat qubit. The interaction sequence may also comprise releasing stabilization on the target cat qubit. The steps are repeated for other states in the list. An optimum of preservation of said noise-bias by the gate is identified when a number of bit flips from the target in the first state of the list is both: (i) equal to the number of bit flips from the target in the other state of the list; AND (ii) minimal.

The at least one parameter may comprise an integration over time of an amplitude of a microwave pulse sent, during the implementation of the operation, at a frequency of a memory of a qubit of the system. In that case the following features may be used: the microwave pulse can be sent anywhere on the circuit, not necessary on the memory per se (although its effects do reach the memory). A pulse can be sent through a transmission line directly coupled to the memory but this is optional. And also the system might be a multi cat qubit system, the gate might be a CNOT gate, the integration over time of an amplitude of microwave pulse is that of a pulse sent at the frequency of the memory of the control as a spurious effect cancellation pump; The interaction sequence could be - prepare a first state from the list, wherein the list includes +alpha, i alpha, -alpha and -i alpha on the control, or other pairs of states with a difference in phase of $\pi$ between the two states of the pair, and nothing in the target. Applying the interaction sequence comprises sending the microwave pulse, and wherein the parameter value includes the amplitude of the pulse, and may include a phase of the pulse. Measuring comprises measuring the number of bit flips from the prepared state on the control qubit. This is repeated for the other states from the list. Optimum of preservation of said noise-bias by the gate is identified when numbers of bit flips from the states of the list equalize to each other.

The at least one parameter may comprise a difference in phase angles of two microwaves sent as a driven stabilization after the performing of the operation to/at the frequency associated with/ respectively a buffer associated to a qubit of the system and a nonlinear coupling element coupling the said associated buffer and a memory of the qubit. In that case the following features may be used : the system might be a multi cat qubit system, the gate might be a CNOT gate, the stabilization is that of the target cat qubit ; The interaction sequence could be - prepare a first state from the list, wherein the list includes +alphaC and +/-alphaT and -alphaC and +/-alphaT. Applying the interaction sequence comprises sending the microwave pulse, and wherein the parameter value is the phase angle difference. Measuring comprises measuring the number of bit flips from the prepared state. This is repeated for the other states from the list. Optimum of preservation of said noise-bias by the gate is identified when numbers of bit flips from the states of the list tend to equalize to each other.

Said applying the interaction sequence may be, in certain embodiments, performed several times before said measuring, with the number of times N that the interaction sequence being applied being furthermore varied from Nmin to Nmax, measuring being performed for each value of N used.

The at least one parameter may comprise two numerical real numbers and said applying the interaction sequence may be performed several times with varying independently the said two numerical real numbers.

Said list of states may comprise one or several pair of coherent states having between the two states in a given pair a phase difference of $\pi$, or a cat state, or may be a list of only one coherent state.

Identifying an optimum may include identifying, from populations measured during the iterating steps, a minimum in a bit-flip rate or bit-flip number or a minimum in a distance (absolute value of a difference) between bit-flip rates or bit-flip numbers related to distinct states of the list, or both finding a minimum in a bit-flip rate or bit-flip number and a minimum in a distance between bit-flip rates or bit-flip numbers related to distinct states of the list.

The operation may be one or a combination of a Z gate, an X gate, a CNOT gate, a Toffoli gate, a state preparation operation, and a parity measurement operation.

The cat qubits may be stabilized by driven two-photon dissipation.

Measuring may be performed through Wigner tomography or any parity measurement process, in particular direct or indirect parity measurements, and in particular mapping different parities to different populations in the memory. The parity of the state can be measured with a transmon.

Measuring may be performed without any parity measurement, but by measuring the number of photons/populations in the memory. A Z(pi/2) gate is performed using the dynamical Zeno effect, an X(pi/2) gate is performed using the holonomic gate, the Pauli operator Z is measured using a longitudinal readout. The first two steps are based solely on the two-photon dissipation mechanism. To achieve the third step, pump a term of the ATS Hamiltonian to engineer the required longitudinal coupling.

Thus measuring is performed through Wigner tomography or any parity measurement process, in particular direct or indirect parity measurements, and in particular mapping different parities to different populations in the memory of the affected qubit., or wherein measuring is performed by determining a number of photons in the memory of the affected qubit.

There is also provided a computer program comprising instructions which, when the program is executed by a computer, cause the computer to carry out the method mentioned above.

List of the accompanying drawings

Figure 1 illustrates the mapping between resonator states and qubit states, with the corresponding complex plane representations.

Figure 2 shows a lumped-element model of a circuit enabling stabilization in an embodiment.

Figure 3 shows the pulses for an X gate according to an embodiment of the invention.

Figure 4 shows a graphical representation of the action of an Hamiltonian performing a Z gate.

Figure 5 shows the pulses for a Z gate according to an embodiment of the invention.

Figure 6 shows the action of a CNOT gate with the target qubit in the initial state of $|+\alpha\rangle$.

Figure 7 shows a simplified graphical representation of the action of an Hamiltonian performing a CNOT gate.

Figure 8 shows the pulses for a CNOT gate according to an embodiment of the invention.

Figure 9 shows a schematic representation of a method of calibration according to the invention.

Figure 10 shows a calibration of a X gate according to an embodiment of the invention.

Figure 11 shows the results of a calibration of the phase angle of a CNOT gate according to an embodiment of the invention.

Figure 12 shows the results of a calibration of parameters (amplitude integrated over time of the CNOT pulse and target stabilization angle) of a CNOT gate according to an embodiment of the invention.

Embodiments

Cat qubits

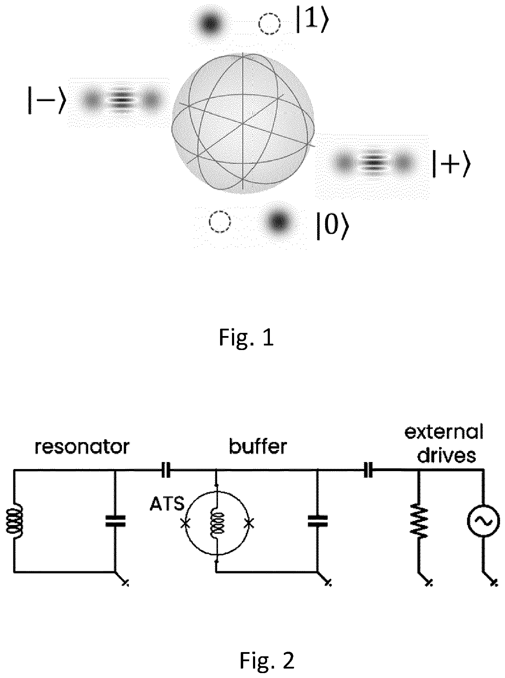

[Fig. 1] Stabilized cat qubits encode quantum information in the quantum state of a linear resonator, generally represented with a function which domain is the complex plane. Coherent states (ie specific state of a quantum harmonic oscillator) $|+\alpha\rangle$ and $|-\alpha\rangle$ are each represented as a 2D Gaussian centered on opposite points in the complex plane.

The coherent states $|+\alpha\rangle$ and $|-\alpha\rangle$ can be used to encode quantum information in qubit with the identifications $|+\alpha\rangle$ as $|0\rangle$ and $|-\alpha\rangle$ as $|1\rangle$. The generic qubit state can be represented as superposition of $|+\alpha\rangle$ and $|-\alpha\rangle$.

Of particular interest are the superpositions referred to as cat states, namely, given N+ and N-normalisation constants with

$$N^{\pm} = \frac{1}{\sqrt{2\left(1 \pm e^{-2|\alpha|^2}\right)}},$$

$$|C+\rangle = N^{+} \times (|+\alpha\rangle + |-\alpha\rangle) \text{ noted } |+\rangle$$

and

$$|C\text{-}> = N^-x(|+\alpha> - |-\alpha>) \text{ noted } |\text{-}>.$$

These are even and odd cat states, and if a different relative phase is used between $|+\alpha>$ and $|-\alpha>$, other cat states can be obtained.

The $|+>$ and $|->$ cat states have interference patterns between the $|+\alpha>$ and $|-\alpha>$ Gaussians, typical signatures of cat states.

A cat qubit is defined as a two-dimensional manifold spanned by the two cat states.

Any physical realization of these systems is affected by imperfections that lead to deviations of the quantum state from the desired $|+\alpha>$, $|-\alpha>$ and their superpositions. A class of errors is referred to as local errors. These errors affect the system in such a way that the complex plane representations of states is deformed and drift towards the complex plane origin over time.

Stabilization - also coined confinement - protects the system against these errors, effectively fixing the coherent states $|+\alpha>$ and $|-\alpha>$ - and their superpositions - in place in the complex plane. In particular R. Lescanne et al. (2020) demonstrated that cat qubits can be stabilized with a non-linear conversion between two photons of a first mode a - a memory mode or cat qubit mode - and one photon of a second mode b - called buffer mode.

Stabilized cat qubits are not error-free despite the stabilization. Bit-flip errors are unwanted transitions between the two qubit states. Thus a bit-flip error occurs when a confined coherent state transforms into the other confined coherent state : the $|+\alpha>$ coherent state transforms into the $|-\alpha>$ coherent state or vice versa.

[Fig. 2] At the hardware level, a non-limiting model for the circuit consists of a linear resonator - where the quantum information is stored as $|+\alpha>$, $|-\alpha>$ and their superpositions - referred to as the memory of the qubit, with an additional resonator referred to as the buffer of the qubit. The buffer includes a circuit element called asymmetrically threaded SQUID (ATS), which enables the stabilization of the memory states. The ATS is a SQUID (Superconducting Quantum Interference Device) loop shunted by a linear inductor, creating two loops through which magnetic flux can be threaded to enable different operations. The simplified circuit is shown in Fig. 2 that shows lumped-element model of a circuit including the elements enabling the stabilisation.

The stabilization or confinement is activated with two microwave drives, one to the buffer resonator and the other to the ATS, such that the sum of these two frequencies is equal to twice the frequency of the memory mode. These drives are introduced through the external drives.

Cat qubits can more generally be stabilized or confined by one or more the following exemplary schemes:

Stabilization schemes

a) a parametric dissipative stabilization, with jump operator $L_2 = \sqrt{\kappa_2}(a^2 - \alpha^2)$, where $\kappa_2$ is the two-photon dissipation rate, $a$ is the photon annihilation operator and $\alpha$ is a complex number defining the cat qubit. This jump operator can be realized by coupling a lossy buffer mode b with dissipation rate $\kappa_b$, and a four-wave mixing device - typically a Josephson junction, an ATS or a DC bias coupled to one or more Josephson junctions (for which the Applicant filed the European patent application EP 23306839.4) - to the cat qubit mode a and by engineering the Hamiltonian $\frac{H}{\hbar} = g_2(a^2 - \alpha^2)b^\dagger$, where b is the photon annihilation operator of the buffer mode b and $g_2$ is the two-photon coupling rate, by applying to the four-wave mixing device a pump at frequency $|2f_a - f_b|$ and a drive of the buffer mode at frequency $f_b$ provided $g_2 < \kappa_b$.

b) a dissipative squeezing stabilization, with jump operator $L_{SC} = \sqrt{\kappa_{SC}}\left(\left(cosh(r)a + sinh(r)e^{i\theta}a^\dagger\right)^2 - \alpha^2\right)$, where $\kappa_{SC}$ is the squeezed two-photon dissipation rate, $a$ is the photon annihilation operator, $\alpha$ is a complex number defining the cat qubit, r and $\theta$ are the modulus and argument of the complex squeezing parameter $\xi = re^{i\theta}$. This jump operator can be realized by coupling a lossy buffer mode b with dissipation rate $\kappa_b$, and a four-wave mixing device - typically a Josephson junction or an ATS -, to the cat qubit mode a and by engineering the Hamiltonian

$$\frac{H}{\hbar} = g_{SC}\left(\left(cosh(r)a + sinh(r)e^{i\theta}a^{\dagger}\right)^2 - \alpha^2\right)b^{\dagger} + h.c.$$

, where $b$ is the photon annihilation operator of mode b and $g_{sc}$ is the squeezed two-photon coupling rate, with several pumps at frequencies $|2f_a - f_b|$, $f_b$ and $2f_a + f_b$, and a drive of the buffer mode b at frequency $f_b$ provided $g_{SC} < \kappa_b$.

c) a variant of the previous stabilization scheme b), for which the Applicant filed the European patent application EP 23175147.0.

d) a Kerr Hamiltonian $\frac{H}{\hbar} = \frac{K}{2}\left(a^{\dagger 2} - \alpha^2\right)\left(a^2 - \overline{\alpha^2}\right)$, where $K$ is the amplitude of the Kerr Hamiltonian, $a$ is the photon annihilation operator, and $\alpha^2$ is the mean photon number.

e) a detuned Kerr Hamiltonian $\frac{H}{\hbar} = \frac{K}{2}\left(a^{\dagger 2} - \alpha^2\right)\left(a^2 - \overline{\alpha^2}\right) - \Delta a^{\dagger}a$, where $K$ is the amplitude of the Kerr Hamiltonian, a is the photon annihilation operator, $\alpha$ is a complex number defining the cat qubit, and $\Delta$ is the detuning factor.

f) a two-photon exchange (TPE) Hamiltonian $\frac{H}{\hbar} = g_2(a^2 - \alpha^2)\sigma_+ + h.c$., where $g_2$ is the complex two-photon coupling rate, $a$ is the photon annihilation operator, $\alpha$ is a complex number defining the cat qubit, and $\sigma_\pm$ are the lowering and raising operators of the two-level system. This Hamiltonian can be engineered in the same way as the parametric dissipative stabilization a).

g) a resonant dissipative stabilization, with jump operator $L_2 = \sqrt{\kappa_2}(a^2 - \alpha^2)$ $\alpha^2$), where $\kappa_2$ is the two-photon dissipation rate, $a$ is the photon annihilation operator and $\alpha$ is a complex number defining the cat qubit. This jump operator can be realized by coupling a lossy buffer mode b with dissipation rate $\kappa_b$, and a three-wave mixing device to the cat qubit mode a which engineers the Hamiltonian $\frac{H}{\hbar} = g_2(a^2 - \alpha^2)b^{\dagger}$, where b is the photon annihilation operator of the buffer mode b provided the mode frequencies verify substantially $2f_a = f_b$ and $g_2 < \kappa_b$ to which a drive of the buffer mode at frequency $f_b$ is added.

In particular, the dissipative stabilization schemes (specifically schemes a)-c) ) including the resonant dissipative stabilization scheme g) have been found to be particularly effective in realizing cat qubits with very low bit-flip errors. Further, combinations of the various dissipative stabilization schemes with other stabilization schemes, such that there is still some component of dissipative stabilization, are also particularly effective.

Bit-flip errors

A bit-flip error occurs when a confined state transforms into the other confined state. For example, the $|+\alpha>$ state transforms into the $|-\alpha>$ state or vice versa. Bit-flip errors are quantified measuring the populations of the stabilised coherent states $|+\alpha>$ and $|-\alpha>$.

For example, one can quantify the bit-flip errors induced by an operation in the following way: a) prepare and stabilise the state $|+\alpha>$, b) perform the operation - a sequence of interaction, leading to a quantum gate or any operation, e.g. can be simply waiting a duration of time whilst stabilization is on - c) measure the population of the states $|+\alpha>$ and $|-\alpha>$.

Assuming that the desired result of the operation is the state $|+\alpha>$, in case of few bit-flip errors a high population in $|+\alpha>$ and a low population in $|-\alpha>$ are then measured, whereas if many bit-flips happened during the operation, the populations of $|+\alpha>$ and $|-\alpha>$ are measured equal or close to equal because they tend to equalize.

The populations of the states $|+\alpha>$ and $|-\alpha>$ can be measured for example measuring the parity of the corresponding $+\alpha$ and $-\alpha$ points in the complex plane, with even parity corresponding to high population and zero parity corresponding to no population.

Measuring the population of the states be done by performing a Wigner tomography, and comparing the values at the locations of the two "blobs". The population of state |+α> and |-α> P(±α) are then given by the value of the Wigner function at the two locations +α and -α as follows

$$P(\pm\alpha) = W(\pm\alpha) * \pi/2$$

The Wigner function is proportional to parity, therefore measuring the Wigner function is equivalent to measuring parity.

Parity can be measured for example in the following ways: - encoding the parity into the state of an ancillary transmon and measuring the state of the transmon.

Parity can also be measured by transmon-free readout. Parity measurement and photon number measurement are known. See for example Reglade et al., arXiv:2307.06617 2023 which describes measurement process using transmon-free readout and Lescanne et al. Nature Physics volume 16, pages 509-513 (2020) which describes measurement process using a transmon.

As the two specific locations ±α are known a priori, a full Wigner tomography is not required: only the Wigner tomography providing the Wigner function of these locations is useful for the measurement of the populations.

With population measurements, the bit-flip error rate Γ can be given/extracted by

$$\Gamma = [\ P(+\alpha) - P(-\alpha)\ ]\ /\ \Delta t$$

where Δt is the duration of the operation

The above calculation can be performed starting with the |-α> state.

An example of measuring bit-flip times according to the method above is given in Lescanne et al. Nature Physics volume 16, pages 509-513 (2020).

Dissipative circuits

In dissipative stabilization schemes the cat qubit is stabilized through the engineering of a jump operator - or dissipator - LZ expressed as $L_2^\alpha = \sqrt{\kappa_2}(a^2 - \alpha^2)$. The parametric dissipative stabilization relies on generating the terms $a^2$ and $\alpha^2$. The term $a^2$ corresponds to the non-linear conversion between two photons of a first mode a - the memory - and one photon of a second mode b - the buffer. This term requires a pump at a frequency $|2f_a - f_b|$, where $f_a$ is the resonant frequency of the first mode a and $f_b$ is the resonant frequency of the second mode b. Such a pump is thus a two-photon pump. The term $\alpha^2$ requires the drive of the second mode b at a frequency $f_b$. Such a drive is thus a two-photon drive. The resonant dissipative stabilization corresponds to the particular case where $2f_a = f_b$.

The quantum system comprises a non-linear superconducting quantum circuit and a command circuit. The non-linear superconducting quantum circuit is arranged to make possible three-wave mixing or four-wave mixing between a first mode a and a second mode b. In the following, the first mode a is used as a memory hosting a cat qubit, while the second mode b is used as a buffer in between the cat qubit and the external environment.

The first mode a and the second mode b each correspond to natural resonant frequencies of the non-linear superconducting quantum circuit. Consequently, the first mode a and the second mode b each have a respective resonant frequency. The first mode a has a resonant frequency $f_a = \frac{\omega_a}{2\pi}$ and the second mode b has a resonant frequency $f_b = \frac{\omega_b}{2\pi}$, where $\omega_a$ and $\omega_b$ are the respective angular frequencies of the first mode a and the second mode b. The non-linear superconducting quantum circuit thus comprises components operating in a superconducting regime which host the modes independently of each other or concurrently. The first mode a and the second mode b may be hosted in different subsets of components of the superconducting circuit or on the same subset of components.

The non-linear superconducting quantum circuit is subject to microwave radiations delivered by the command circuit causing various non-linear interactions between the first mode a and the second mode b. The frequency of each microwave radiation is tuned to select specific terms within the rotating wave approximation.

The non-linear superconducting quantum circuit comprises a non-linear element and at least one resonant portion.

The non-linear element generates the jump operator $L_2^\alpha$ for stabilizing the cat qubit. Alternatively, the non-linear element and at least one resonant portion are arranged to otherwise confine a cat qubit via schemes d), e), or f).

In the case in which a parametric dissipative stabilization is implemented, the non-linear element may be a four-wave mixing non-linear element.

The four-wave mixing non-linear element is for instance an ATS. It is known to the skilled person that an ATS can be used to engineer the 2-to-1 photon conversion, i.e. the first term $a^2$ of the jump operator L2, in order to perform a parametric dissipative stabilization, as successfully shown by R. Lescanne et al. (2020). More particularly, such a 2-to-1 photon conversion between the first mode a and the second mode b is obtained by parametrically pumping the ATS at the frequency $f_p = |2f_a - f_b|$. Advantageously, the pump frequency satisfies $f_p \gg g_2$ to make this parametric pumping work as well as possible.

Contrary to earlier implementations of a stabilization scheme in which the superconducting circuit element used as a four-wave mixer was a transmon with a single Josephson junction, the solution developed by R. Lescanne et al. (2020) exploits the ATS design which has much lower cross-Kerr terms than a transmon and thus allows to obtain the exponential suppression of bit-flips.

Alternatively, the non-linear element performing four-wave mixing may be something other than an ATS. For instance, the non-linear element may instead only include one or more Josephson junctions.

In the case in which a resonant dissipative stabilization is implemented, the non-linear element is a three-wave mixing non-linear element. As above-mentioned, this resonant dissipative case corresponds to the particular situation where $2f_a = f_b$ ($f_p = 0$) and may be particularly advantageous. A three-wave mixing non-linear element is used, together with a DC bias that brings the system to the 2-to-1 photon resonance, as described in EP4207005A1.

The resonant portion of the circuit is arranged to be connected to the non-linear element of the circuit to provide the non-linear superconducting quantum circuit with the first mode a and the second mode b having respective resonant frequencies $f_a$ and $f_b$. More particularly, the first mode a and the second mode b "participate" in the non-linear element, which means that a portion or the entirety of the mode magnetic energy is stored in the non-linear element.

Such a non-linear superconducting quantum system comprises at least one resonant portion, and typically two or more resonant portions to form two electromagnetic modes, including a cat qubit mode and a buffer mode.

The command circuit is arranged to deliver microwave radiations and optionally a DC bias. It is arranged at least to drive the second mode b by delivering radiation at a frequency equal to the second resonant frequency $f_b$ to the resonant portion since both the parametric dissipative stabilization and the resonant dissipative stabilization require such a drive of the second mode b.

Bias preserving gates

The X gate

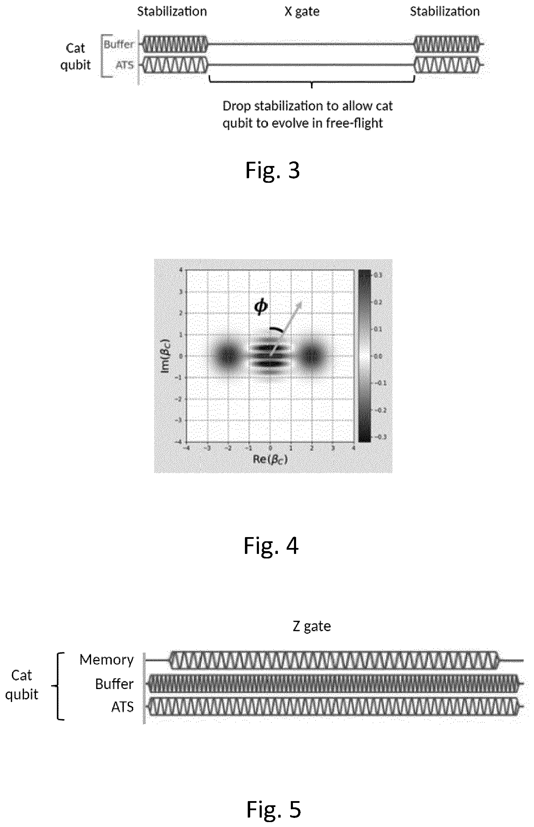

[Fig. 3] The X($\pi$) gate, referred to as X gate in the following, transforms $|+\alpha\rangle=|0\rangle$ into $|-\alpha\rangle=|1\rangle$ and vice versa, which is the equivalent of performing a rotation of $\pi$ around the X axis. It can be realized either in software, or implementing a Hamiltonian of the following form

$$H = \Delta \, {}^* \, a^\dagger a \tag{1}$$

with $\Delta$ a coefficient and a the ladder operator for the memory mode.

This gate can preserve a noise bias in which bit-flips are suppressed.

The action of the Hamiltonian in Eq. 1 can be seen as a rotation of the coherent states Gaussians around the center of the complex plane at a rate $\Delta$. The X gate can therefore be realized implementing the Hamiltonian in Eq. 1 for a duration such that the rotation angle is $\pi$.

Since the stabilization prevents such a process from happening, it needs to be switched off and turned back on at the correct time. Bit-flip errors occur if the rotation angle is different from $\pi$.

The time T for which the stabilization is kept off is thus a key parameter of the X gate.

Other implementations of an X gate could exist, but are not described here.

The Z gate3

[Fig. 4] The Z($\theta$) gate, referred to as Z gate in the following, is a single qubit gate. It performs a rotation by an angle $\theta$ around the Z axis. It can be realised with a displacement Hamiltonian of the following from

$$H = \varepsilon \, {}^* (a \, {}^* \exp(i\phi) + a^{\dagger \, *} \exp(-i\phi)) \tag{2}$$

with $\varepsilon$ the displacement amplitude, $\Phi$ a displacement phase and a the ladder operator for the memory mode of the qubit.

Such a Hamiltonian induces rotations around the Z-axis of the qubit Bloch sphere.

This gate can preserve a noise bias in which bit-flips are suppressed.

[Fig. 5] The Hamiltonian in Eq. 2 can be obtained with a microwave drive at the memory frequency.

When applied on a stabilized cat qubit, this gate creates a conversion from the state $|C_+>=|+>$ to the state $|C_->=|->$ and vice versa by an angle $\theta$. The stabilisation prevents the coherent states from displacing in the complex plane, and the net effect of the Hamiltonian in Eq. 2 is a change in the interference pattern of the cat state. The amplitude $\varepsilon$ and duration T of the pulse are chosen to obtain a rotation of the interference fringes of the desired angle $\theta$.

Better gate performances are achieved for an optimal phase $\Phi$ modulo $\pi$. Otherwise, bit-flip errors occur during the gate, and the duration or the amplitude has to be increased to reach the angle $\theta$.

Thus, $\varepsilon$, T and $\phi$ are parameters of the Z gate.

CNOT gate (also named CX gate, for controlled X gate)

The action of a CNOT gate is shown in the following truth table, where the first bit is the state of the control qubit and the second bit is the state of the target qubit. Should the first bit be 0, the gate keeps both bits unchanged. Should the second bit be 1, the gate keeps the first bit unchanged and performs an X gate on the second bit, i.e. changes the second bit to its opposite.

| Input state | Output state |
|---|---|
| 00 | 00 |
| 01 | 01 |
| 10 | 11 |
| 11 | 10 |

This gate can preserve a noise bias in which bit-flips are suppressed.

A natural representation of the CNOT is to write that the target stays idle when the control qubit is in the coherent state $|+\alpha>_C$ and rotates by $\pi$ (in the complex plane) when the control qubit is in the coherent state $|-\alpha>_C$.

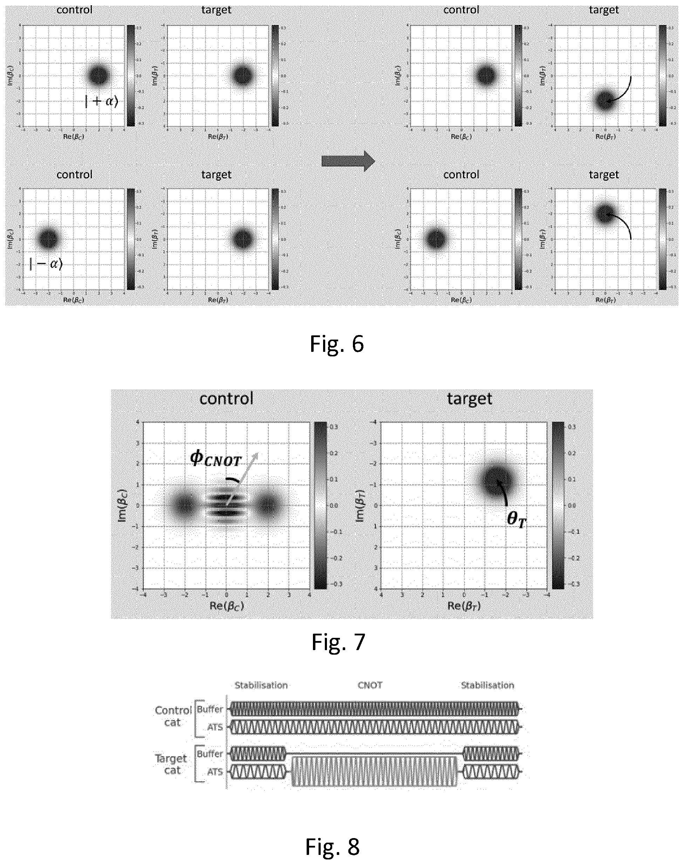

[Fig. 6] Otherwise, adopting a symmetrized picture by performing a frame rotation of the target qubit so that it always rotates, but by $+\pi/2$ or $-\pi/2$ in the complex plane around the origin depending on the state of the control qubit. The corresponding truth table is the following:

| Input state | Output state |
|---|---|
| $|+\alpha>_C \ |+\alpha>_T$ | $|+\alpha>_C \ |+\alpha \times \exp(-i\pi/2)>_T$ |
| $|-\alpha>_C \ |+\alpha>_T$ | $|-\alpha>_C \ |+\alpha \times \exp(+i\pi/2)>_T$ |
| $|+\alpha>_C \ |-\alpha>_T$ | $|+\alpha>_C \ |-\alpha \times \exp(-i\pi/2)>_T$ |
| $|-\alpha>_C \ |-\alpha>_T$ | $|-\alpha>_C \ |-\alpha \times \exp(+i\pi/2)>_T$ |

The physical system on which the CNOT is implemented consists of two coupled circuits. One circuit is the control qubit, the other circuit the target qubit.

[Fig. 7] The Hamiltonian enabling the gate, in the form of a longitudinal coupling between the control qubit and the target qubit, can be written as

$$H = g_{CNOT} \left(a + a^\dagger\right) b^\dagger b \tag{3}$$

where $g_{CNOT}$ is the CNOT interaction strength, a and b are ladder operators for the control and for the target qubits, respectively.

Figure 7 shows a simplified effect of a CNOT gate. A cat state in the control would, in addition to what is shown, cause a split in two blobs of the target.

Parameters of the CNOT pulse

[Fig. 8] As can be seen in the Hamiltonian in Eq. 3, the rotation of the target qubit in the complex plane occurs at a rate proportional to $g_{CNOT}$.

Calling $T_{CNOT}$ the CNOT gate time, at the end of which the target qubit rotated as wanted, this parameter of the gate is therefore of the form, with k a real number

$$T_{CNOT} = k / g_{CNOT} \qquad (4)$$

The Hamiltonian in Eq. 3 is activated with a microwave drive sent to the ATS of the target qubit at the frequency of the memory of the control.

Starting from stabilised control and target qubits, the stabilisation of the target qubit is turned off to allow for conditional rotation of the target qubit. On the contrary, the stabilisation of the control qubit is kept on.

The conditional rotation of the target qubit is then activated by a microwave drive sent to the ATS of the target at the frequency of the memory of the control. This drive is kept active during the duration $T_{CNOT}$.

Once the desired conditional rotation is complete (ie after the $T_{CNOT}$ duration), the stabilisation on the target is turned back on at the same time the CNOT pulse, ie the drive on the ATS of the target qubit, is turned off.

The parameters of the CNOT pulse itself - sent to the ATS of the target cat qubit to implement the Hamiltonian of equation (3) - need to be calibrated, and one of these parameters is a) its phase angle, whereas another one is b) its amplitude integrated over time during the duration $T_{CNOT}$.

a) CNOT pulse phase angle

In all generality there exists a free phase degree of freedom between the stabilised control qubit cat state and the longitudinal Hamiltonian in Eq. 3. Without loss of generality, this relative phase can be written as carried by the longitudinal Hamiltonian of Eq. 3 as follows

$$H = g_{CNOT} (a^* exp(i\phi_{CNOT}) + a^{\dagger *} exp(-i\phi_{CNOT})) \, b^{\dagger}b \qquad (5)$$

Physically, the phase difference $\phi_{CNOT}$ originates from the different optical paths taken by the stabilisation drives and CNOT pulse.

For a given CNOT pulse amplitude $g_{CNOT}$ and a duration $T_{CNOT}$, each value of $\phi_{CNOT}$ corresponds to a rotation of the target qubit cat state in the complex plane.

$\phi_{CNOT}$ impacts the target qubit and the control qubit very differently.

- Optimal values of $\phi_{CNOT}$, equal to each other modulo $\pi$, correspond to the largest rotation angle spanned by the target qubit coherent states in the complex plane around the origin.
- And, even more importantly, non optimal values of the phase $\phi_{CNOT}$ induce bit-flip errors in the control qubit during the performing of the gate.

b) CNOT pulse amplitude integrated over time over the duration of the pulse

If the value of the CNOT pulse amplitude integrated over time over the duration of the pulse $\int g_{CNOT}$ is miscalibrated, it results in undershoot or overshoot of the conditional rotation in the target. When the control is a cat, and the target is one blob, then the target blob separates in two blobs rotating in opposite direction, and should the undershoot or overshoot be there because of miscalibration, the final separation between the blobs will not be maximal, of a $\pi$ angle. Thus, when the stabilization is turned back on, bit flip errors occur. A miscalibrated pulse amplitude integrated over time over the duration of the pulse therefore induces bit-flip errors in the target qubit.

Parameters of an adjunct drive

Spurious terms arise, and experimental imperfections need to be corrected. One of such spurious terms corresponds to a direct drive on the control qubit, with a Hamiltonian of the following form

$$H_{DRIVE} = \xi(a + a^{\dagger}) \qquad (6)$$

where the coefficient $\xi$ depends on the amplitude and phase of the pulse sent on the ATS of the target cat qubit.

The spurious Hamiltonian in Eq. 6 can be cancelled by an additional drive, sent on the memory of the control qubit, of the form

$$H_{CANCEL} = g_{cancel} * \xi(a*exp(i\phi_{cancel}) + a^\dagger*exp(-i\phi_{cancel})) \qquad (7)$$

such that

$$H_{DRIVE} + H_{CANCEL} = 0 \qquad (8)$$

In practice this is achieved with an additional pulse, coined cancellation pulse, emitted simultaneously with the main gate pulse, ie the pulse sent on the ATS of the target cat qubit (and discussed above).

The cancellation pulse is sent at the frequency of the memory of the control cat qubit.

Tuning amplitude and phase of the cancellation pulse effectively tunes the parameters $g_{cancel}$ and $\phi_{cancel}$ in the Hamiltonian in Eq. 7, so that the equality in Eq. 8 is verified.

Parameters of the restart of the stabilization pulses on the target cat qubit

And eventually, the stabilisation on the target qubit is switched back on after the completion of the gate, when in case of a good calibration of the previous parameters of the gate, a rotation of the coherent states of the target qubit in the complex plane of $+\pi/2$ or $-\pi/2$ has been obtained.

This stabilisation includes waves sent respectively to the ATS and to the buffer of the target qubit, as explained previously. The two waves have to be restarted with a defined phase angle.

Due to the detuning of the memory of the target qubit and the influence of other spurious terms, an overall rotation of the target qubit coherent states is furthermore added on top of the conditional rotation of the target qubit provided by the gate.

An angle $\theta_T$ defined as a phase angle difference in between the stabilisation waves sent respectively to the ATS and to the buffer of the target qubit on switching on again the stabilisation is therefore set.

A miscalibrated target stabilisation differential phase angle in fact induces bit-flip errors in the target due to an offset between the stabilisation and the actual position of the coherent states.

Summary on the CNOT parameters

Thus $\phi_{CNOT}$, $\int g_{CNOT}$ $\phi_{cancel}$, $g_{cancel}$, and $\theta_T$ are parameters of the CNOT gate.

A miscalibration of certain gate parameters can lead to bit-flip errors. The present disclosure relates to measuring bit-flip errors in various settings sweeping the parameters of the physical realization of the gates. This allows a sensitive and robust optimization of gates using the bit-flip errors as a metric. The disclosure further relates to a set of calibration procedures for the pulse parameters. With bias-preserving gates, the reduction of bit-flip errors persists during the execution of the gates. The calibration procedures make use of bit-flip errors, taking advantage of the stabilisation and of the noise bias to tune the hardware parameters for gate implementations. Bit-flip based calibrations are robust thanks to the stabilisation and the noise bias.

Detailed method of calibration

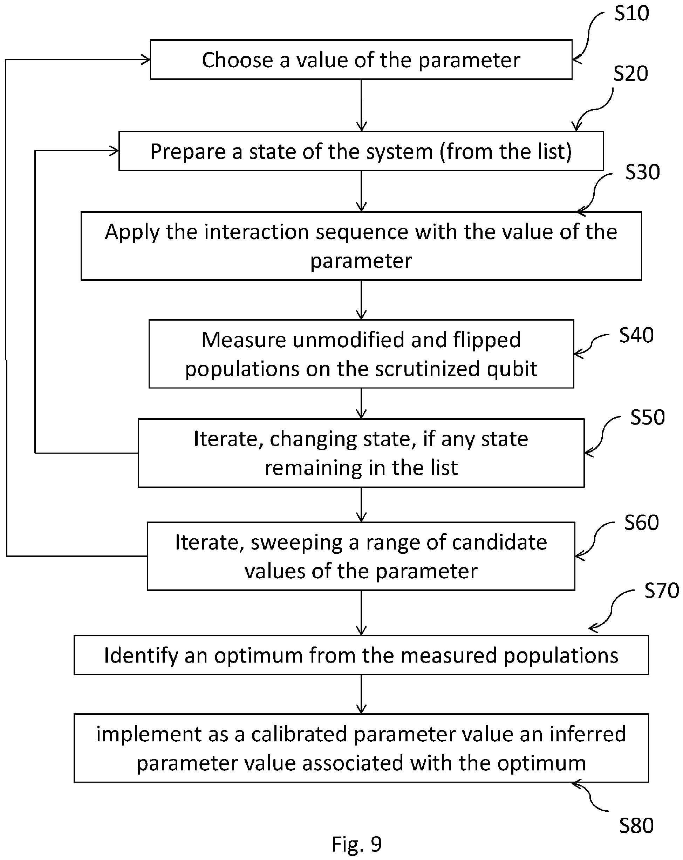

[Fig. 9] The method of calibration of a parameter according to the invention comprises, in a general manner, for at least one parameter of an interaction sequence for performing a physical quantum gate defined on a single or multi-qubit system in a superconducting circuit based on cat qubits having a reduced bit-flip error rate as a noise-bias,

for a qubit of the system affected by variations of the at least one parameter, this qubit being identified as a scrutanized qubit, and with a list of at least one state of said qubit system,

steps of, for a value of the at least one parameter chosen in a step of choosing a parameter value S10, and for each state of the list,

- preparing the state in a step S20,

- applying the interaction sequence on the prepared state and with the parameter value, in a step S30,

- measuring unmodified and bit-flipped populations of the affected (scrutanized) qubit at an end of said applying,

- changing the state of the list in a step S50, and iterating the said preparing, applying and measuring steps

- and then changing the parameter value in a step S60 and iterating the said preparing, applying and measuring steps with varied values of the at least one parameter, sweeping a range of candidate values of the at least one parameter,

- and then identifying, in a step S70, from populations measured during the iterating steps, an optimum of preservation of said noise-bias by the gate, and implementing in a step S80, as a calibrated value of the at least one parameter an inferred parameter value associated with the said identified optimum.

The optimum of preservation of the noise-bias by the gate may be: (i) a symmetry between measured bit-flip populations of two or more states of the list; and/or (ii) a minima of measured bit-flip populations of one or more states.

In the following paragraphs, calibration procedures making use of bit-flip errors in reference to the gates described above are given.

X gate

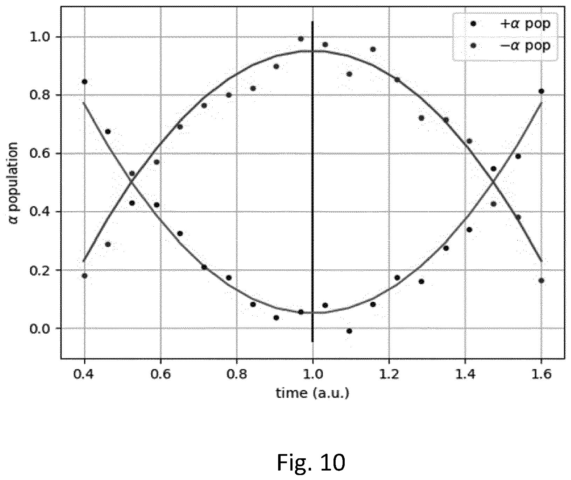

[Fig. 10] The X gate can implemented releasing the stabilisation for the appropriate duration, such that the rotation angle is $\pi$, and turning the stabilisation back on. The duration of the stabilisation release can be calibrated as follows:

prepare the state $|+\alpha>$

release the stabilisation for a given duration

resume the stabilisation and immediately measure the number of bit-flip errors with respect to the expected end state $|-\alpha>$. In practice it is possible to resume the stabilisation, wait between 10 ns and the intrinsic bit flip time depending on parameters, and only then measure the populations.

This is then performed several times, with various durations of the stabilisation release.

A list of only one state can be used here - then there is no need to iterate with another state.

This can also be performed with preparing the $|-\alpha>$ state instead of the $|+\alpha>$ state, and measuring errors with respect to the expected end state, ie $|+\alpha>$.

The optimal duration is that with minimal bit-flip errors.

The figure shows a qualitative representation of a calibration of the X gate, assuming $|+\alpha>$ as initial state. The time of stabilisation release is swept on the x-axis, measuring the populations of $|+\alpha>$ and $|-\alpha>$ at each time step. The optimal release time minimises bit-flips with respect to the target state $|-\alpha>$, indicated by the black vertical line, maximising the population contrast.

Z($\theta$) gate

The Z($\theta$) gate can be implemented with a pulse at the memory frequency, characterised by its amplitude, duration and phase angle. Once the duration is known (predetermined) and fixed, the phase angle of the pulse can be calibrated as follows:

prepare the state $|+\alpha>$

turn on the stabilisation and simultaneously apply the Z gate pulse with a given phase angle value, on the qubit, and for a duration equal to a whole number (eg. 1, 2, ... N) of the fixed and predetermined duration

at the end of the Z gate pulse measure the populations of $|+\alpha>$ and $|-\alpha>$ and thus, when necessary, be in a position to infer the number of bit-flip errors,

repeat with various values of the given phase angle

optionally but advantageously repeat with other whole numbers of the duration

and then repeat with preparing the state $|-\alpha>$ (because in this embodiment a list of two coherent states with a phase difference of $\pi$ is used - however an alternative is given below)

The optimal phase angle of the pulse is such that the number of bit-flip errors is equal for the two state preparations |+α> and |-α>. The optimal phase is found from a clear and sharp feature in the data, reducing the experimental uncertainty compared to the method of the prior art.

The data analysis is as follows for each state preparation:

for each value of $\phi$, the measured population of the control p(N) vs N is fitted to an exponential decay of the form

$$p(N) = A*exp(-\Gamma*N) + B \qquad (9)$$

where A is a prefactor, B is an offset and $\Gamma$ is the decay rate of the curve, associated to the bit-flip rate during the gate. We obtain a value for $\Gamma$ for each $\phi$.

$\Gamma$ vs $\phi$ is then fitted to a linear function of the form

$$\Gamma(\phi) = m*\phi + q \qquad (10)$$

where m and q are fitting parameters.

The intersection of the linear fits for the two preparations corresponds to the optimal $\phi$.

As mentioned above this scenario started with preparing the state |+α>| and repeating with preparing the state |-α>|. But the method can also be prepared with a cat state, ie a state |+> or |->. In that case the procedure would be for example: prepare the state |+>, play the CNOT pulse, and measure bit-flips. The optimal phase is such that the bit flips are minimised. With this alternative, the list can be a list of only one state, but that state is a cat state.

CNOT gate

Bit-flip errors can be used to calibrate different parameters of the CNOT gate.

3.1) the adjunct drive HCANCEL

The amplitude and phase of the cancellation pulse giving HCANCEL can be tuned using bit-flip errors in the following way:

prepare the state $|+\alpha>_C |0>_T$

apply the CNOT pulse and the cancellation pulse on the qubits, with given amplitude and phase of the cancellation pulse

measure the number of bit-flip errors in the control qubit

repeat with various values of the amplitude and phase of the cancellation pulse

repeat with preparing the states $|-\alpha>_C|0>_T$, $|+i\alpha>_C|0>_T$, $|-i\alpha>_C|0>_T$, with i the imaginary unit (in this embodiment, there are two pairs of coherent states in the list, with a phase difference of $\pi$ between the two states in each pair). This is for one qubit. The other qubit is kept unchanged in the list.

The optimal amplitude and phase of the cancellation pulse are such that the number of bit-flip errors is as equal as possible for all the four state preparations.

Note that instead using states $|-\alpha>_C|0>_T$, $|+i\alpha>_C|0>_T$, $|-i\alpha>_C|0>_T$, this can be carried out with any two pairs of coherent states, with a phase difference of $\pi$ between the states within the pairs.

3.2) $\phi_{CNOT}$

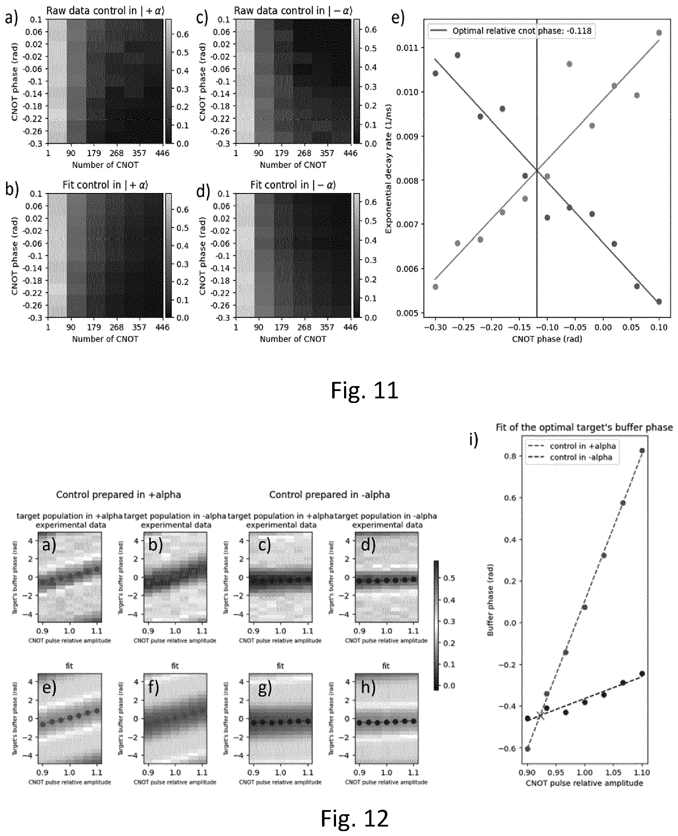

[Fig. 11] The phase of the CNOT pulse can be tuned using bit-flip errors in the following way:

prepare the state $|+\alpha>_C|+\alpha>_T$

activate the stabilisation on the control qubit and apply the CNOT pulse on the qubits with a given phase value and with a given duration

measure the populations of $|+\alpha>_C$

Similar to above for the Z-gate, in practice it is possible to resume the stabilisation on the control, wait between 10 ns and the intrinsic bit flip time of the control depending on parameters, and only then measure the populations of the control.

On the figure 11, parts a) and c) show measured control populations in a) the state $|+\alpha>_C$ when preparing $|+\alpha>_C|\pm\alpha>_T$, and c) the state $|-\alpha>_C$ when preparing $|-\alpha>_C|\pm\alpha>_T$. The x axis shows increased time length of the pulse applied (expressed in whole number from 1 to 446 of a basic predefined pulse length, each N consisting of a CNOT pulse followed by some stabilization time), and the y axis shows the phase angle value used. In the experiment of figure 11, the delay between the end of the CNOT pulse and measurement of the control (namely the stabilization time) was approximately 2ms.

optionally but advantageously repeat with other CNOT pulse durations (that can be whole number N of a predetermined duration of the pulse)

repeat with other values of the CNOT pulse phase angle

For example the CNOT pulse phase is swept in the range -0,3 rad. to 0,1 rad, and the CNOT pulse number N is in the range 1 to 446.

repeat with preparing the state $|-\alpha>_C|+\alpha>_T$ ie the state of the target qubit is unchanged for all preparation, but the state of the control qubit is changed into the opposite - in that case measure the populations of $|-\alpha>_C$

The optimal phase of the CNOT pulse is such that the number of control bit-flip errors is equal for the two state preparations.

This can be done also with preparing states $|+\alpha>_C|-\alpha>_T$ and then $|-\alpha>_C|-\alpha>_T$.

The calibration can be performed playing the CNOT pulse multiple times (varying N), and this is a manner of implementing the optional steps of repeating with other pulse durations. By increasing the number N, it may be possible to "magnify" the bitflips, which makes the resolution of bit-flip measurements higher.

The data analysis is as follows for each state preparation:

for each value of $\phi_{CNOT}$, the measured population of the control p(N) vs N is fitted to an exponential decay of the form

$$p(N) = A*\exp(-\Gamma*N) + B \tag{11}$$

where A is a prefactor, B is an offset and $\Gamma$ is the decay rate of the curve, associated to the bit-flip rate during the gate. We obtain a value for $\Gamma$ for each $\phi$CNOT value. As will be appreciated, obtaining a value for $\Gamma$ for each $\phi$CNOT value is valid within experimental regimes wherein the control is stabilized for a short period of time after the end of the CNOT pulse and prior to measurements. This short period of time is between 2ns and 5 times the intrinsic bit-flip time of the control, and most preferably between 10ns and the intrinsic bit-flip time of the control. In other experimental regimes, e.g. when the measurement of the control is performed almost immediately after the end of the CNOT pulse, instead the prefactor A or the offset B may contain the required information and thus a value for A and/or B is obtained for each $\phi$CNOT value.

In the figure 11, parts b) and d) show fits of the data in a) and c), respectively with equation 11.

Axes are labelled in the same manner in all parts a) to d) of figure 11.

$\Gamma$ vs $\phi$CNOT is fitted to a linear function of the form

$$\Gamma(\phi CNOT) = m* \phi CNOT + q \tag{12}$$

where m and q are fitting parameters.

In the figure 11, part e) shows extracted $\Gamma$ vs $\phi_{CNOT}$ for $|+\alpha>_C|\pm\alpha>_T$ preparation (decreasing line) and for $|-\alpha>C|\pm\alpha>T$ preparation (increasing line), together with the fits to Eq. 12. The optimal phase is found at the intersection of the fits.

The intersection of the linear fits for the two state preparations corresponds to the optimal $\phi$CNOT.

The optimal CNOT phase is found to be $\Phi_{CNOT}$ = -0,118 rad. The associated exponential decay rate is about 0,008 ns$^{-1}$.

As mentioned above this scenario started with preparing the state $|+\alpha>_C|+\alpha>_T$ and repeating repeat with preparing the state $|-\alpha>_C|+\alpha>_T$. In this embodiment, there are two pairs of coherent states in the list, with a phase difference of $\pi$ between the two states in each pair. This is for one qubit. The other qubit is kept unchanged in the list.

But the method can also be prepared with a cat state in the control, ie a state |+> or |->. With this alternative, the list can be a list of only one state, but that state is a cat state in the control. The other qubit is kept unchanged in the list. In that case the procedure would be for example: prepare the state $|+>_C|+\alpha>_T$, play the CNOT pulse, and measure bit-flips in the control. The optimal phase is such that the bit flips are minimised.

In general, the state in the target does not matter for the calibration of the phase of the CNOT pulse.

3.3) CNOT pulse amplitude and stabilisation angle

[Fig. 12] The CNOT pulse amplitude $g_{CNOT}$ and the target qubit differential angle $\theta_T$ for the resuming of the stabilisation after the pulse (stabilisation angle in short in the following or also 'buffer phase') can be together tuned using bit-flip errors within a common calibration procedure as follows

prepare the state $|+\alpha>_C|+\alpha>_T$

activate the stabilisation on the control qubit and apply the CNOT pulse releasing the stabilisation on the target qubit, given a CNOT pulse amplitude value

apply this CNOT pulse on the target keeping the stabilisation on the control

turn on the stabilization on the target given a stabilisation angle value $\theta_T$

The sequences control qubit stabilization and target qubit CNOT pulse followed by stabilisation on the target qubit can be repeated more than once - N times ie a whole number of times- before the measurement. This increases resolution.

measure the populations of $|+\alpha>_T$ and $|-\alpha>_T$ and then be in a position to infer the number of bit-flip errors in the target qubit

The figure 12 shows in part a): target qubit p+ with control prepared in $|+\alpha>_C$. The x-axis shows the CNOT pulse amplitude with a relative unit from essentially 0,9 to 1,1. The y-axis shows the target qubit buffer phase (stabilisation angle) from roughly -4 rad to 4 rad.

Axes are labelled in the same manner in all parts a) to h) of figure 12.

The figure 12 shows in part b): target p- with control prepared in $|+\alpha>_C$, in part c): target p+ with control prepared in $|-\alpha>_C$, and in part d): target p- with control prepared in $|-\alpha>_C$.

repeat with various CNOT pulse amplitude values and stabilisation angle values - The CNOT pulse amplitude sweep for example in the range 0,9 - 1,1 arbitrary unit (a.u.), and the target stabilisation angle $\theta_T$ is taken in the whole range 0 rad to $2\pi$ rad.

repeat preparing the state $|-\alpha>_C|+\alpha>_T$

In this embodiment a list of two coherent states with a phase difference of $\pi$ is used for one qubit. The other qubit is kept unchanged in the list.

The optimal CNOT pulse amplitude and stabilisation angle are such that the number of bit-flips is equal and minimised for both preparations.

This can be done also with preparing states $|+\alpha>_C|-\alpha>_T$ and then $|-\alpha>_C|-\alpha>_T$.

The data analysis is as follows for each state preparation:

for each amplitude of the CNOT pulse, the target populations p+ and p- in $|+\alpha>_T$ and $|-\alpha>_T$, respectively, are fitted to the following function

$$p_{\pm} = A \frac{\exp[\pm 2|\alpha|^2 \cos(\theta_T - \theta_0)]}{2\cosh[2|\alpha|^2 \cos(\theta_T - \theta_0)]} + B$$

$$(13)$$

with A a prefactor, B a population offset and $\theta_0$ an offset in the stabilisation angle, for each amplitude of the CNOT pulse, the optimal stabilisation angle $\theta_T$ is such that the difference between p+ and p- is maximised

In the figure 12 parts e), f), g), h) are fits to the data in a), b), c), d), respectively. The dotted lines represent the optimal $\theta_T$ found by the fit for each CNOT pulse amplitude.

The optimal stabilisation angle $\theta_T$ vs CNOT pulse amplitude is the fitted to a linear function.

In the figure 12, in part i), the optimal $\theta_T$ vs CNOT pulse amplitude is fitted to a linear function.

The optimal $\theta_T$ and CNOT pulse amplitude are found at the intersection of the linear fits for the two state

preparations $|+\alpha>_C|+\alpha>_T$ and $|-\alpha>_C|+\alpha>_T$.

The intersection of the fits corresponds to the best CNOT pulse amplitude and target stabilisation angle $\theta_T$.

**Claims**

1. A method of calibration of at least one parameter of an interaction sequence for performing a quantum operation defined on a single or multi-qubit system in a superconducting circuit based on cat qubits having a reduced bit-flip error rate as a noise-bias, the method comprising, for a qubit of the system affected by variations of the at least one parameter and with a list of at least one state of said qubit system, steps of, for a value of the at least one parameter and for each state of the list,

   - preparing (S20) the state,
   - applying (S30) the interaction sequence on the prepared state and with the parameter value,
   - measuring (S40) bit-flipped or bit-unflipped populations of the affected qubit at an end of said applying,

   iterating (S50, S60, S10, S20) the said preparing, applying and measuring steps with varied values of the at least one parameter, in order to sweep a range of candidate values of the at least one parameter, and then identifying (S70), from populations measured during the iterating steps, an optimum of preservation of said noise-bias by the operation, and implementing (S80) as a calibrated value of the at least one parameter an inferred parameter value associated with the said identified optimum.

2. The method of calibration according to claim 1, wherein the at least one parameter comprises a phase angle of a microwave pulse sent to a nonlinear coupling element coupling a memory of a qubit of the system to a buffer of said qubit.

3. The method of calibration according to claim 1, wherein the at least one parameter comprises a phase angle of a microwave pulse sent at the frequency of a memory of a qubit of the system in a multi-qubit system.

4. The method of calibration according to claim 1, wherein the at least one parameter comprises the duration of a release of a driven stabilization of a qubit of the system.

5. The method of calibration according to claim 1, wherein the at least one parameter comprises an integration over time of an amplitude of a microwave pulse sent, during the implementation of the operation, to a nonlinear coupling element coupling a memory of a qubit of the system to a buffer of said qubit.

6. The method of calibration according to claim 1, wherein the at least one parameter comprises an integration over time of an amplitude of a microwave pulse sent, during the implementation of the operation, at the frequency of a memory of a qubit of the system.

7. The method of calibration according to claim 1, wherein the at least one parameter comprises a difference in phase angles of two microwaves sent as a driven stabilization after the performing of the operation to respectively a buffer associated to a qubit of the system and a nonlinear coupling element coupling the said associated buffer and a memory of the qubit.

8. The method of calibration according to any of claims 1 to 7, wherein said applying the interaction sequence is performed several times before said measuring, with the number of times N that the interaction sequence is applied is furthermore varied from Nmin to Nmax, measuring being performed for each value of N used.

9. The method of calibration according to any of claims 1 to 8, wherein the at least one parameter comprises two numerical real numbers and said applying the interaction sequence is performed several times with varying independently the said two numerical real numbers.

10. The method of calibration according to any of claims 1 to 9, wherein said list of states comprises one or several pair of coherent states having between the two states in a given pair a phase difference of $\pi$ or a cat state, or is a list of only one coherent state.

11. The method of calibration according to any of claims 1 to 10, wherein identifying an optimum includes identifying, from populations measured during the iterating steps, a minimum in a bit-flip rate or bit-flip number or a minimum in a distance between bit-flip rates or bit-flip numbers related to distinct states of the list, or both finding a minimum in a bit-flip rate or bit-flip number and a minimum in a distance between bit-flip rates or bit-flip numbers related to distinct states of the list.

12. The method of calibration according to any of claims 1 to 11, wherein the quantum operation is one or a combination of an X gate, a CNOT gate, a Toffoli gate, a state preparation, and a parity measurement.

13. The method of calibration according to any of claims 1 to 12, wherein the cat qubits are stabilized by driven two-photon dissipation.

14. The method of calibration according to any of claims 1 to 13, wherein measuring is performed through Wigner tomography or any parity measurement process, in particular direct or indirect parity measurements, and in particular mapping different parities to different populations in the memory of the affected qubit., or wherein measuring is performed by determining a number of photons in the memory of the affected qubit.

15. A computer program comprising instructions which, when the program is executed by a computer, cause the computer to carry out the method of any of claims 1 to 14.

Fig. 1

Fig. 2

Fig. 3

Fig. 4

Fig. 5

Fig. 6

Fig. 7

Fig. 8

```
                                            ┌─ S10
┌─────────────────────────────────────┐
│      Choose a value of the parameter  │ ← S20
└─────────────────────────────────────┘
                    │
                    ▼
┌─────────────────────────────────────┐
│  Prepare a state of the system (from the list)  │
└─────────────────────────────────────┘    ┌─ S30
                    │
                    ▼
┌─────────────────────────────────────┐
│  Apply the interaction sequence with the value of the
│                parameter             │
└─────────────────────────────────────┘
                    │
                    ▼
┌─────────────────────────────────────┐
│      Measure unmodified and flipped  │ ← S40
│   populations on the scrutinized qubit │
└─────────────────────────────────────┘
                    │
                    ▼
┌─────────────────────────────────────┐
│      Iterate, changing state, if any state  │ ← S50
│        remaining in the list         │
└─────────────────────────────────────┘
                    │
                    ▼
┌─────────────────────────────────────┐
│   Iterate, sweeping a range of candidate  │ ← S60
│        values of the parameter        │
└─────────────────────────────────────┘
                    │
                    ▼
┌─────────────────────────────────────┐
│  Identify an optimum from the measured populations  │ ← S70
└─────────────────────────────────────┘
                    │
                    ▼
┌─────────────────────────────────────┐
│  implement as a calibrated parameter value an inferred
│    parameter value associated with the optimum  │
└─────────────────────────────────────┘
                                            └─ S80
```

Fig. 9

Fig. 10

Fig. 11

Fig. 12

Europäisches
Patentamt

European
Patent Office

Office européen
des brevets

# EUROPEAN SEARCH REPORT

**Application Number**

EP 24 30 5336

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NICOLAS WITTLER ET AL: "Integrated tool-set for Control, Calibration and Characterization of quantum devices applied to superconducting qubits", ARXIV.ORG, CORNELL UNIVERSITY LIBRARY, 201 OLIN LIBRARY CORNELL UNIVERSITY ITHACA, NY 14853, 2 December 2022 (2022-12-02), XP091384130, DOI: 10.1103/PHYSREVAPPLIED.15.034080 * Sections II, III * | 1-15 | INV. G06N10/20 G06N10/40 G06N10/70 |

----- 

|  |  |
|---|---|
| | **TECHNICAL FIELDS SEARCHED (IPC)** |
| | G06N |

The present search report has been drawn up for all claims

| Place of search | Date of completion of the search | Examiner |
|---|---|---|
| The Hague | 2 December 2024 | Baldan, Marco |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

**EP 4 614 398 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 23306839
- EP 23175147
- EP 4207005 A1

**Non-patent literature cited in the description**

- **MARQUET et al.** *arXiv:2307.06761*, 2023
- **REGLADE et al.** *arXiv:2307.06617*, 2023
- **GUILLAUD ; MIRRAHIMI.** *Phys. Rev. X*, 2019, vol. 9, 041053
- **LESCANNE et al.** *Nature Physics*, 2020, vol. 16, 509-513